# EUROPÄISCHE PATENTSCHRIFT

(11) **EP 1 645 444 B1**
(45) Veröffentlichungstag und Bekanntmachung des Hinweises auf die Patenterteilung: **08.07.2009**
(21) Anmeldenummer: 04450190.6
(22) Anmeldetag: 08.10.2004
(51) Int. Cl.: B60C 27/08

(54) **Verschluss für Reifenketten**
Fastener for antiskid chains
Dispositif de fermeture pour chaînes antidérapantes

(43) Veröffentlichungstag der Anmeldung: 12.04.2006
(73) Patentinhaber: PEWAG AUSTRIA GmbH, 8010 Graz (AT)
(72) Erfinder: Pengg, Ägyd, 9220 Velden (AT)
(74) Vertreter: Patentanwaltskanzlei Matschnig & Forsthuber OG

(56) Entgegenhaltungen:
- EP-A- 0 958 948
- EP-A- 1 327 537

## Beschreibung

Die Erfindung betrifft einen Verschluss für Reifenketten, bestehend aus zwei ineinander hakbaren Verbindungsgliedern, die je über zumindest ein Anschlussglied mit Laufkettengliedern verbunden sind, und jedes Verbindungsglied eine Aufnahmeöffnung und einen in diese führenden Einführschlitz aufweist, wobei die Gliedschenkel jedes Verbindungsgliedes beidseitig des Einführschlitzes zu diesem in Schrägflächen verlaufen und jedes Verbindungsglied eine von der Aufnahmeöffnung abgesonderte Bohrung für die Aufnahme eines Anschlussgliedes aufweist.

Weiters betrifft die Erfindung ein Verbindungsglied für einen Verschluss für Reifenketten, welcher aus zwei ineinander hakbaren Verbindungsgliedern besteht, die je über zumindest ein Anschlussglied mit Laufkettengliedern verbunden sind.

Darüber hinaus betrifft die Erfindung eine Reifenkette.

Ein Verschluss der eingangs genannten Art ist aus der gattungsbildenden EP 09 58 948 A3 bekannt. Hierbei sind die beiden Verbindungsglieder unterschiedlich ausgebildet, wobei die Achsen der Bohrung für das Anschlussglied und die Aufnahmeöffnung des ersten Verbindungsgliedes normal zueinander und die Achsen der Aufnahmeöffnung und der Bohrung für das Anschlussglied des zweiten Verbindungsgliedes parallel zueinander verlaufen.

Die bekannte Lösung ermöglicht zwar eine stabile Lage der beiden Verbindungsglieder an dem Reifen und zeichnet sich durch einen geringen Verschleiß aus, dem steht jedoch als Nachteil gegenüber, dass zwei unterschiedliche Verbindungsteile hergestellt werden müssen, wodurch sich die Produktionskosten erhöhen.

Es ist daher eine Aufgabe der Erfindung, einen Verschluss für Reifenketten zu schaffen, der neben einer stabilen Lage an dem Reifen und geringem Verschleiß auch kostengünstig und einfach herzustellen ist.

Diese Aufgabe wird mit einem Verschluss der eingangs genannten Art erfindungsgemäß dadurch gelöst, dass eine Projektion der Achse der Bohrung und eine Projektion der Achse der Aufnahmeöffnung jedes Verbindungsgliedes in eine zu den beiden Achsen parallele Ebene einen spitzen Winkel von annähernd 45 ° miteinander einschließen.

Durch die erfindungsgemäße Lösung lässt sich eine stabile Lage der beiden Verbindungsglieder auf dem Reifen gewährleisten, da die daran anschließenden Anschlussglieder im wesentlichen in Tangentialebenen zur Reifenauflauffläche liegen können. Darüber hinaus können die beiden Verbindungsglieder mit nur einer Form hergestellt werden, da durch die relative Verdrehung der Achsen der Bohrung und der Aufnahmeöffnung eines Verbindungsgliedes zueinander eine gute Auflage auf dem Reifen auch dann gewährleisten lässt, wenn die beiden Verbindungsglieder identisch sind. Somit ermöglicht die erfindungsgemä-βe Lösung auch eine sehr kostengünstige Herstellung.

Falls die beiden Anschlussglieder kreisförmig ausgebildet sind, lassen sich auch zwei oder mehrere Laufkettenglieder in ein Anschlussglied einhängen, ohne dass es zu einem unerwünschten Aneinanderreiben der eingehängten Laufkettenglieder kommt. Dabei ist das genannte Einhängen noch erleichtert, falls der Durchmesser jedes Anschlussgliedes größer ist als jene der Laufkettenglieder.

Nicht nur in Hinblick auf die Festigkeit, sondern auch zur besseren Auflage auf der Reifenlauffläche kann es sich empfehlen, wenn die Drahtstärke des Anschlussgliedes größer ist als jene der Laufkettenglieder.

Eine besonders einfach herzustellende Variante der Erfindung besteht darin, dass die beiden Verbindungsglieder im wesentlichen identisch ausgebildet sind.

Um eine große Verschleißfläche zu erzielen und somit den Verschleiß zu verringern, kann jedes Verbindungsglied eine in Richtung ihres dem Einführschlitz gegenüberliegenden Rückens abgeschrägte Auflagefläche, sowie eine in Richtung ihres auf der Seite des Einführschlitzes liegenden Rückens abgeschrägte Auflagefläche aufweisen.

Die Auflageflächen können an einander gegenüberliegenden Seiten der Längsmittelebene jedes Verbindungsgliedes angeordnet sein, wobei die Auflageflächen auch im wesentlichen parallel zueinander verlaufen können.

Durch eine Ausbildung des Einführschlitzes als Kreuzschlitz kann gewährleistet werden, dass sich der Verschluss nur in einer Stellung, in welcher die beiden Einführschlitze der beiden Verbindungsglieder um 90 ° zueinander gedreht sind, öffnen lässt. Unter einem Kreuzschlitz wird hierbei verstanden, dass die Schrägflächen eines Einsführschlitzes je unter einem Winkel von 90 ° zueinander verlaufen.

Die Verschleißfläche und somit das Verschleißvolumen lässt sich dadurch weiter vergrößern, dass jede Auflagefläche AF1, AF2 an ihrem dem je zugeordneten Rücken RU1, RU2 abgewandten Endbereich einen Fortsatz F01, F02 aufweist. Durch diese Fortsätze F01, F02 kann auch ein Verdrehen der Verbindungsglieder VG1, VG2 gegeneinander über einen vorgebbaren Winkelbereich hinaus verhindert werden, sodass ein Verklemmen der Verbindungsglieder VG1, VG2 miteinander unterbunden werden kann. Somit kann durch die beiden Fortsätze F01, F02 ein einfaches Öffnen des Verschlusses gewährleistet werden.

Die oben genannte Aufgabe lässt sich auch mit einem Verbindungsglied der eingangs genannten Art lösen, welches eine Aufnahmeöffnung und einen in diese führenden Einführschlitz aufweist, wobei die Gliedschenkel des Verbindungsgliedes beidseitig des Einführschlitzes zu diesem in Schrägflächen verlaufen und das Verbindungsglied eine von der Aufnahmeöffnung abgesonderte Bohrung für die Aufnahme eines Anschlussgliedes aufweist, wobei eine Projektion der Längsachse der Bohrung und eine Projektion der Längsachse der Aufnahmeöffnung des Verbindungsgliedes in eine zu den beiden Längsachsen parallele Ebene einen spitzen Winkel von annähernd 45 ° miteinander einschließen.

Die Erfindung ist auch durch eine Reifenkette verwirklicht, die zumindest einen erfindungsgemäßen Verschluss aufweist.

Im Folgenden ist die Erfindung samt weiterer Vorteile anhand einiger nicht einschränkender Ausführungsbeispiele weiter erläutert, welche in der Zeichnung dargestellt sind. In dieser zeigen:
- Fig.1: ein erfindungsgemäßer Verschluss in einer ersten perspektivischen Ansicht;
- Fig. 2: der Verschluss aus Fig. 1 in einer zweiten perspektivischen Ansicht;
- Fig. 3: eine perspektivische Ansicht eines Verbindungsgliedes des Verschlusses aus Fig. 1;
- Fig. 4: eine weitere perspektivische Ansicht eines Verbindungsgliedes aus Fig. 3
- Fig. 5: eine Seitenansicht des Verbindungsgliedes aus Fig. 3;
- Fig. 6: eine Unteransicht des Verbindungsgliedes aus Fig. 3;
- Fig. 7: einen Schnitt entlang der Linie VII-VII in Fig. 5;
- Fig. 8: eine Detailansicht des Bereiches VIII aus Fig. 5;
- Fig. 9: einen Schnitt entlang der Linie IX-IX in Fig. 5 ;
- Fig.10: einen Schnitt entlang der Linie X-X in Fig. 5 und
- Fig.11: einen Schnitt entlang der Linie XI-XI in Fig. 5.

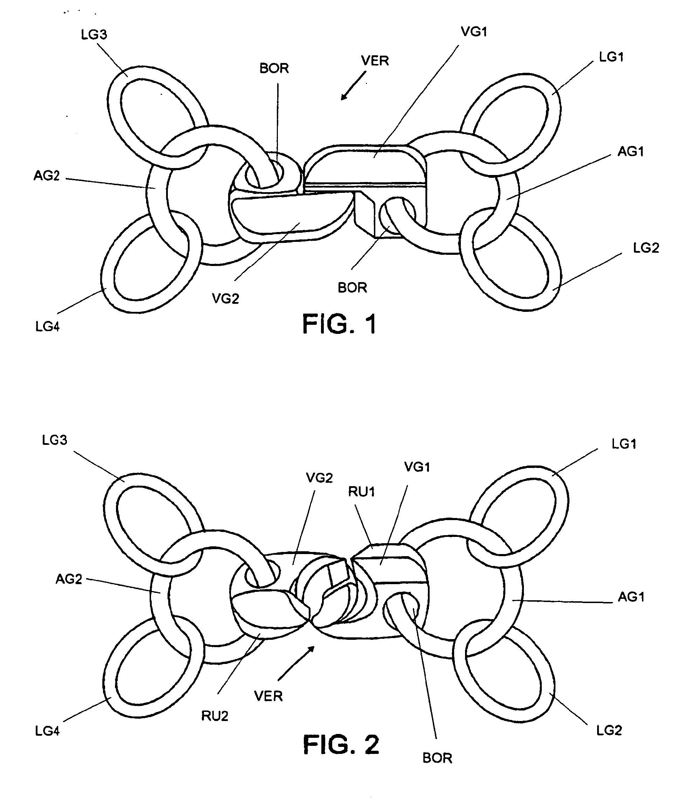

Aus Fig. 1 und Fig. 2 geht ein Abschnitt einer Reifenkette hervor, in dem vier mit LG1, LG2, LG3 und LG4 bezeichnete Kettenstränge über einen lösbaren Verschluss VER miteinander verbunden sind. Natürlich kann der Verschluss VER auch nur zwei oder drei, ebenso aber auch mehrere Kettenstränge miteinander verbinden. Dieser Verschluss VER weist zwei ineinander hakbare Verbindungsglieder VG1, VG2 auf, wobei das eine der beiden Verbindungsglieder VG1, VG2, nämlich das Verbindungsglied VG1, eine Bohrung für die Aufnahme eines Anschlussgliedes AG1 besitzt, und in dieses Anschlussglied AG1 sind Laufkettenglieder des Kettenstranges LG1 bzw. , LG2 eingehängt. Ebenso besitzt das zweite Verbindungsglied VG2 eine Bohrung, in welche ein Anschlussglied AG2 eingehängt ist. In dieses Anschlussglied sind im vorliegenden Fall Laufkettenglieder der Kettenstränge LG3 und LG4 eingehängt.

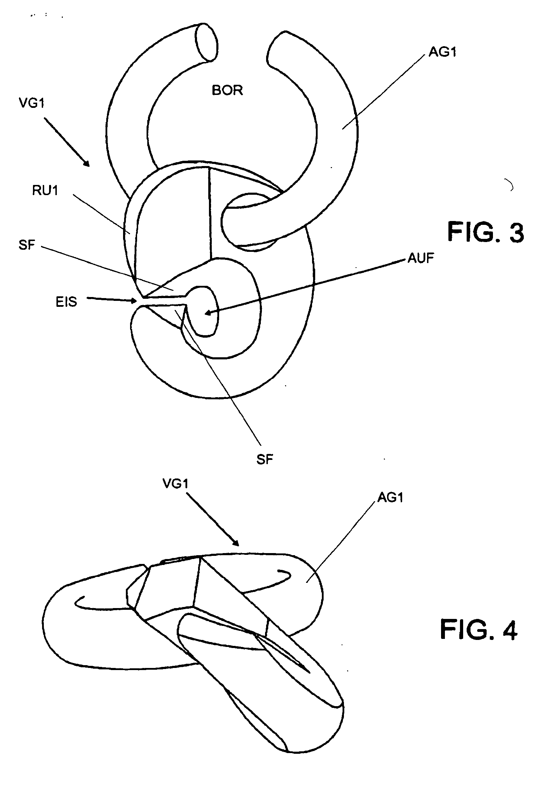

Jedes der beiden Verbindungsglieder besitzt gemäß Fig. 1 und 2 neben der Bohrung für ein Anschlussglied AG1, AG2 auch eine davon abgesonderte Aufnahmeöffnung, die in Fig. 3 für das Verbindungsglied VG1 näher dargestellt und mit den Bezugszeichen AUF für die Aufnahme und BOR für die Bohrung bezeichnet sind. Im Folgenden wird von einer Ausführungsform der Erfindung ausgegangen, in der die beiden Verbindungsglieder VG1, VG2 im wesentlichen identisch ausgebildet sind, wie in Fig. 1 und 2 dargestellt, obgleich eine identische Ausführung der beiden Verbindungsglieder VG1, VG2 nicht bei allen möglichen Ausführungsformen der Erfindung der Fall sein muss.

Die beiden Verbindungsglieder VG1, VG2 können in der gezeigten Weise mit ihren Bugen in den Aufnahmeöffnungen AUF verhakt sein.

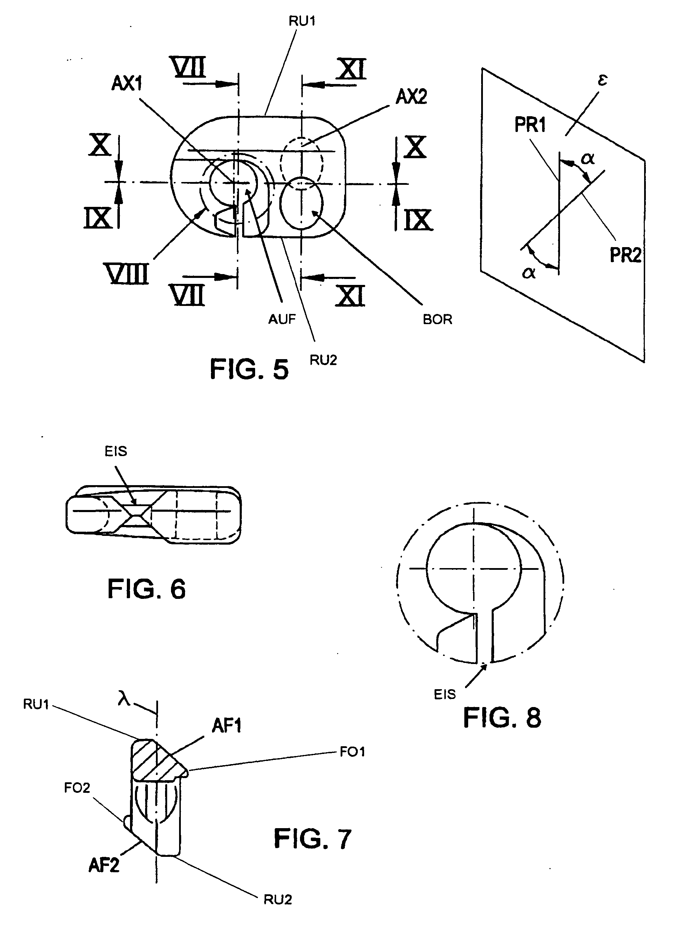

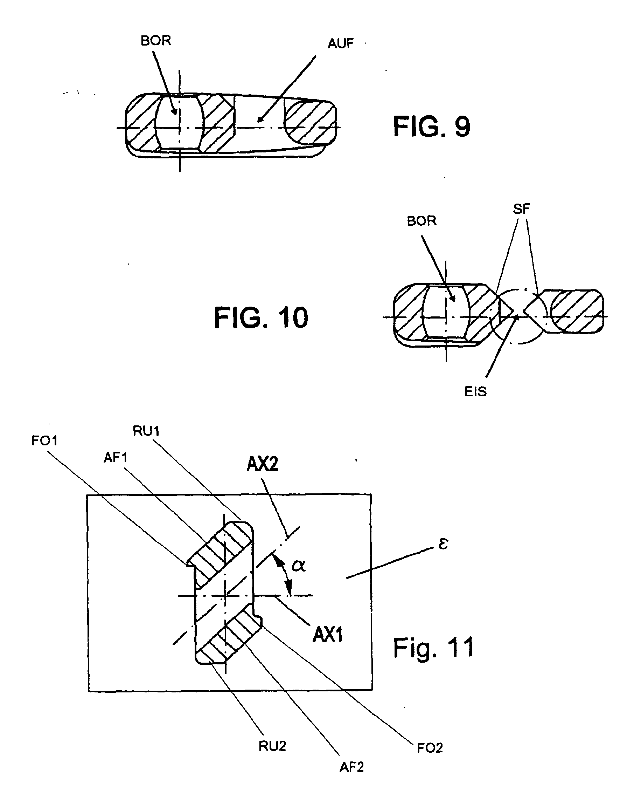

Um das genannte Verhaken zu ermöglichen, besitzt jedes der beiden Verbindungsglieder einen Einführschlitz EIS, welcher je einen Längsschenkel der Verbindungsglieder öffnet, wobei beidseitig der Einführschlitze EIS hier mit SF bezeichnete Schrägflächen bzw. Abschrägungen zu dem Einführschlitz EIS führen, wodurch sich die Schenkel der Verbindungsglieder zu den Schlitzen hin verjüngen (Fig. 5, 6, 9, 10, ). Die Schrägflächen SF und die Breite des Einführschlitze EIS sind so bemessen, dass man durch geeignetes Verschwenken und Verschieben der beiden Verbindungsglieder VG1 und VG2 diese voneinander lösen kann. Bevorzugterweise sind die beiden Einführschlitze EIS je als Kreuzschlitz ausgeführt. Ein Öffnen kann in diesem Fall dadurch geschehen, wenn man in Fig. 2 das rechte Verbindungsglied zunächst um 90 ° Grad, noch in der Zeichenebene bleibend, nach oben schwenkt, dann das Glied um 90 ° nach vorne dreht und schließlich bei Ineinandergreifen aller acht Schrägflächen nach vorne aus dem Verbindungsglied 1 herauszieht. weiters zu entnehmen ist, können die beiden Verbindungsglieder VG1, VG2 im wesentlichen identisch ausgebildet sein.

Wie Fig. 4 zu entnehmen ist, verlaufen die Bohrung BOR für das Anschlussglied AG1 und die Aufnahmeöffnung AUF schief zueinander.

Gemäß Fig. 5 und 12 schließen hierbei eine Projektion PR1 der Achse AX1 der Bohrung BOR und eine Projektion PR2 der Achse AX2 der Aufnahmeöffnung AUF jedes Verbindungsgliedes VG1, VG2 in eine zu den beiden Achsen AX1, AX2 parallele Ebene ε einen spitzen Winkel α von annähernd 45 ° miteinander ein. Somit nehmen in jedem Verbindungsglied VG1, VG2 die Achse AX1 der Aufnahmeöffnung und die Achse AX2 der Bohrung gesehen in Richtung ihrer Abstandsgeraden einen Winkel von annähernd 45 ° ein. Unter annähernd 45 ° ist zu verstehen, dass der Winkel in einem Bereich von ± 5 ° von 45 ° abweichen kann.

Gemäß Fig. 7 weist jedes Verbindungsglied eine in Richtung ihres dem Einführschlitz gegenüberliegenden Rückens RU1 abgeschrägte Auflagefläche AF1 auf. Weiters kann jedes Verbindungsglied VG1, VG2 eine in Richtung ihres auf der Seite des Einführschlitzes EIS liegenden Rückens RU2 abgeschrägte Auflagefläche AF2 aufweisen, siehe auch Fig. 1 - Fig. 3. Die beiden oben genannten Auflageflächen können im wesentlichen parallel zueinander und je an einer Seite einer Längsmittelebene λ des Verbindungsgliedes verlaufen. Dadurch ergibt sich, dass die Anschlussglieder AG1 und AG2 auch bei identischer Ausbildung der beiden Verbindungsglieder zu beiden Seiten der beiden Verbindungsglieder VG1 und VG2 beide in Tangentialebenen bezüglich der Reifenauflauffläche liegen. Somit kann durch diese Ausführungsform neben der bereits eingangs erwähnten Vergrößerung der Verschleißfläche auch eine gute Auflage auf der Reifenoberfläche gewährleisten.

Weiters kann an einem Endbereich jeder Auflagefläche ein Fortsatz F01, F02 vorgesehen sein. Durch diese Fortsatz F01, F02 kann, wie bereits eingangs erwähnt, auch ein Verdrehen der beiden Verschlussglieder über einen vorgebbaren Winkelbereich hinaus verhindert werden.

Der dargestellte und beschriebene Verschluss VER weist als besonders günstige Eigenschaft auf, dass es keine bevorzugte Abnutzung irgendeines der für den Verschluss verwendeten Glieder gibt, vor allem deshalb da die beiden Anschlussglieder AG1 und AG2 annähernd in der gleichen Ebene, jedenfalls tangential zu der Reifenlauffläche liegen. Die zuletzt genannten Anschlussglieder AG1 und AG2 sind vorteilhafterweise kreisförmig gestaltet, da sich hierdurch, wie aus Fig. 1 ersichtlich, ohne weiteres zwei oder mehr Kettenstränge LG1, LG2, LG3, LG4 der Laufkette einhängen lassen, ohne dass die eingehängten Glieder aneinander reiben und sich verfrüht abnützen. Dabei ist es empfehlenswert, dass der Durchmesser dieser Anschlussglieder die Gliedlänge der Kettenlaufglieder übersteigt. Überdies ist es zweckmäßig, wenn die Drahtstärke der Anschlussglieder AG1, AG2 die Drahtstärke der Laufkettenglieder LG1, LG2, LG3, LG4 übersteigt, was sich nicht nur auf die Festigkeit, sondern auch auf den ruhigen Lauf der Kette auswirken kann.

Als weiteren Vorteil der Erfindung hat sich bei der praktischen Anwendung gezeigt, dass der Verschluss ein unbewusstes, verdrehtes und damit falsches Einhängen unterbindet, was sich durch die Anbindung der Verschlusshaken an das Kettennetz ergibt.

## Patentansprüche

1. Verbindungsglied (VG1, VG2) für einen Verschluss (VER) für Reifenketten, welcher aus zwei ineinander hakbaren Verbindungsgliedern (VG1, VG2) besteht, die je über zumindest ein Anschlussglied (AG1, AG2) mit Laufkettengliedern (LG1, LG2, LG3, LG4) verbunden sind, das Verbindungsglied (VG1, VG2) weist eine Aufnahmeöffnung (AUF) und einen in diese führenden Einführschlitz (EIS) auf, wobei die Gliedschenkel des Verbindungsgliedes (VG1, VG2) beidseitig des Einführschlitzes (EIS) zu diesem in Schrägflächen (SF) verlaufen und das Verbindungsglied (VG1, VG2) eine von der Aufnahmeöffnung (AUF) abgesonderte Bohrung (BOR) für die Aufnahme eines Anschlussgliedes (AG1, AG2) aufweist, **dadurch gekennzeichnet, dass** eine Projektion (PR1) der Längsachse (AX1) der Bohrung (BOR) und eine Projektion (PR2) der Längsachse (AX2) der Aufnahmeöffnung (AUF) des Verbindungsgliedes (VG1, VG2) in eine zu den beiden Längsachsen (AX1, AX2) parallele Ebene (ε) einen spitzen Winkel (α) von annähernd 45 ° miteinander einschließen.

2. Verschluss (VER) für Reifenketten, **dadurch gekennzeichnet, dass** er zwei ineinander hakbare Verbindungsglieder (VG1, VG2) nach Anspruch 1 aufweist, die je über zumindest ein Anschlussglied (AG1, AG2) mit Laufkettengliedem (LG1, LG2, LG3, LG4) verbunden sind.

3. Verschluss nach Anspruch 2, **dadurch gekennzeichnet, dass** die beiden Anschlussglieder (AG1, AG2) kreisförmig ausgebildet sind.

4. Verschluss nach Anspruch 2 oder 3, **dadurch gekennzeichnet, dass** die Drahtstärke des Anschlussgliedes (AG1, AG2) größer ist als jene der Laufkettenglieder (LG1, LG2, LG3, LG4).

5. Verschluss nach einem der Ansprüche 2 bis 4, **dadurch gekennzeichnet, dass** die beiden Verbindungsglieder (VG1, VG2) im wesentlichen identisch ausgebildet sind.

6. Verschluss nach einem der Ansprüche 2 bis 5, **dadurch gekennzeichnet, dass** jedes Verbindungsglied (VG1, VG2) eine in Richtung ihres ihrem Einführschlitz (EIS) gegenüberliegenden Rückens (RU1) abgeschrägte Auflagefläche (AF1) aufweist.

7. Verschluss nach einem der Ansprüche 2 bis 6, **dadurch gekennzeichnet, dass** jedes Verbindungsglied (VG1, VG2) eine in Richtung ihres auf der Seite ihres Einführschlitzes (EIS) liegenden Rückens (RU2) abgeschrägte Auflagefläche (AF2) aufweist

8. Verschluss nach den Ansprüchen 6 und 7, **dadurch gekennzeichnet, dass** die Auflageflächen (AF1, AF2) an einander gegenüberliegenden Seiten der Längsmittelebene (λ) jedes Verbindungsgliedes (VG1, VG2) angeordnet sind.

9. Verschluss nach Anspruch 8, **dadurch gekennzeichnet, dass** die Auflageflächen (AF1, AF2) im wesentlichen parallel zueinander verlaufen.

10. Verschluss nach einem der Ansprüche 2 bis 9, **dadurch gekennzeichnet, dass** der Einführschlitz als Kreuzschlitz ausgebildet ist

11. Verschluss nach Anspruch 8, **dadurch gekennzeichnet, dass** jede Auflagefläche (AF1, AF2) an ihrem dem je zugeordneten Rücken (RU1, RU2) abgewandten Endbereich einen Fortsatz (FO1, FO2) aufweist.

12. Reifenkette, **gekennzeichnet durch** einen Verschluss nach einem der Ansprüche 2 bis 11.

## Claims

1. A shackle (VG1, VG2) for a closure (VER) for tire chains, consisting of two interhooking shackles (VG1, VG2) connected via at least one coupling element (AG1, AG2) to chain links (LG1, LG2, LG3, LG4), each of said shackles (VG1, VG2) having a reception hole (AUF) and an insertion slot (EIS) leading thereto, while the shanks of said shackles (VG1, VG2) extend toward said insertion slot (EIS) on each side thereof along inclined surfaces (SF) and each shackle (VG1, VG2) has a bore (BOR) for the accommodation of a coupling element (AG1, AG2), which bore is distinct from said reception hole (AUF), **characterized in that** a projection (PR1) of the longitudinal axis (AX1) of said bore (BOR) and a projection (PR2) of the longitudinal axis (AX2) of said reception hole (AUF) of said shackle (VG1, VG2) into a plane (ε) parallel to said two longitudinal axes (AX1, AX2) mutually enclose an acute angle (a) of approximately 45 degrees.

2. A closure (VER) for tire chains, **characterized in that** it comprises two interhooking shackles (VG1, VG2) as defined in claim 1, each of which is connected, via at least one coupling element (AG1, AG2), to chain links (LG1, LG2, LG3, LG4).

3. The closure as defined in claim 2, **characterized in that** said two coupling elements (AG1, AG2) are of circular shape.

4. The closure as defined in claim 2 or claim 3, **characterized in that** the wire gage of said coupling element (AG1, AG2) is greater than that of said chain links (LG1, LG2, LG3, LG4).

5. The closure as defined in any one of claims 2 to 4, **characterized in that** said two shackles (VG1, VG2) are of substantially the same shape.

6. The closure as defined in any one of claims 2 to 5, **characterized in that** each shackle (VG1, VG2) has a contact surface (AF1) which is bevelled in the direction of its back (RU1) disposed opposite to its insertion slot (EIS).

7. The closure as defined in any one of claims 2 to 6, **characterized in that** each shackle (VG1, VG2) has a contact surface (AF2) which is bevelled in the direction of its back (RU2) disposed beside its insertion slot (EIS).

8. The closure as defined in claim 6 or claim 7, **characterized in that** said contact faces (API, AF2) are disposed on opposite sides of the longitudinal central plane (I) of each shackle (VG1, VG2).

9. The closure as defined in claim 8, **characterized in that** said contact faces (AF1, AF2) extend substantially parallel to each other.

10. The closure as defined in any one of claims 2 to 9, **characterized in that** said insertion slot is in the form of a cross slot.

11. The closure as defined in claim 8, **characterized in that** each contact face (AF1, AF2) has an extension (FO1, F02) in its end region remote from the respective back (RU1, RU2) assigned thereto.

12. A tire chain, **characterized by** a closure as defined in any one of claims 2 to 11.

## Revendications

1. Élément d'assemblage (VG1, VG2) pour un dispositif de fermeture (VER) destiné à des chaînes antidérapantes, lequel est formé par deux éléments d'assemblage (VG1, VG2), qui peuvent être accrochés l'un dans l'autre et sont reliés chacun à des maillons de chenille (LG1, LG2, LG3, LG4) par l'intermédiaire d'au moins un maillon de jonction (AG1, AG2), ledit élément d'assemblage (VG1, VG2) comportant une ouverture de réception (AUF) et une fente d'introduction (EIS) menant dans ladite ouverture, les branches de l'élément d'assemblage (VG1, VG2) s'étendant de part et d'autre de la fente d'introduction (EIS) en formant des surfaces inclinées (SF) par rapport à cette dernière et l'élément d'assemblage (VG1, VG2) comportant une forure (BOR), séparée de l'ouverture de réception (AUF) et destinée à recevoir un maillon de jonction (AG1, AG2), **caractérisé en ce qu'**une projection (PR1) de l'axe longitudinal (AX1) de la forure (BOR) et une projection (PR2) de l'axe longitudinal (AX2) de l'ouverture de réception (AUF) de l'élément d'assemblage (VG1, VG2) forment entre eux un angle (α) aigu de 45° environ dans un plan (ε) parallèle aux deux axes longitudinaux (AX1, AX2).

2. Dispositif de fermeture (VER) pour des chaînes antidérapantes, **caractérisé en ce qu'**il comporte deux éléments d'assemblage (VG1, VG2) selon la revendication 1, qui peuvent être accrochés l'un dans l'autre et qui sont reliés chacun à des maillons de chenille (LG1, LG2, LG3, LG4) par l'intermédiaire d'au moins un maillon de jonction (AG1, AG2).

3. Dispositif de fermeture selon la revendication 2, **caractérisé en ce que** les deux maillons de jonction (AG1, AG2) sont circulaires.

4. Dispositif de fermeture selon la revendication 2 ou 3, **caractérisé en ce que** l'épaisseur du fil du maillon de jonction (AG1, AG2) est supérieure à celle des maillons de chenille (LG1, LG2, LG3, LG4).

5. Dispositif de fermeture selon l'une quelconque des revendications 2 à 4, **caractérisé en ce que** les deux éléments d'assemblage (VG1, VG2) sont réalisés de manière sensiblement identique.

6. Dispositif de fermeture selon l'une quelconque des revendications 2 à 5, **caractérisé en ce que** chaque élément d'assemblage (VG1, VG2) comporte une surface d'appui (AF1) chanfreinée en direction de sa paroi arrière (RU1) opposée à sa fente d'introduction (EIS).

7. Dispositif de fermeture selon l'une quelconque des revendications 2 à 6, **caractérisé en ce que** chaque élément d'assemblage (VG1, VG2) comporte une surface d'appui (AF2) chanfreinée en direction de sa paroi arrière (RU2) située sur le côté de sa fente d'introduction (EIS).

8. Dispositif de fermeture selon les revendications 6 et 7, **caractérisé en ce que** les surfaces d'appui (AF1, AF2) sont disposées sur des côtés face à face du plan médian longitudinal (λ) de chaque élément d'assemblage (VG1, VG2).

9. Dispositif de fermeture selon la revendication 8, **caractérisé en ce que** les surfaces d'appui (AF1, AF2) sont orientées sensiblement parallèlement entre elles.

10. Dispositif de fermeture selon l'une quelconque des revendications 2 à 9, **caractérisé en ce que** la fente d'introduction est réalisée sous forme de fente en croix.

11. Dispositif de fermeture selon la revendication 8, **caractérisé en ce que** chaque surface d'appui (AF1, AF2) comporte un prolongement (FO1, F02) au niveau de son extrémité détournée de la paroi arrière (RU1, RU2) qui lui est respectivement associée.

12. Chaîne antidérapante, **caractérisée par** un dispositif de fermeture selon l'une quelconque des revendications 2 à 11.
